# EUROPEAN PATENT SPECIFICATION

(11) **EP 4 185 849 B1**
(45) Date of publication and mention of the grant of the patent: **13.11.2024**
(21) Application number: 21749895.5
(22) Date of filing: 21.07.2021
(51) Int. Cl.: G01K 3/00, G01K 3/04, G01K 11/12, G01K 11/125, G01K 11/18

(54) **SELECTIVELY ACTIVATABLE TIME TEMPERATURE INDICATORS**
SELEKTIV AKTIVIERBARE ZEIT-TEMPERATUR-INDIKATOREN
INDICATEURS DE TEMPÉRATURE DE TEMPS SÉLECTIVEMENT ACTIVABLES

(30) Priority: 23.07.2020 IL 27626320
(43) Date of publication of application: 31.05.2023
(73) Proprietor: Freshpoint Quality Assurance Ltd., 3688847 Nesher, Haifa (IL)
(72) Inventor: SALMAN, Husein, 1244000 Golan Heights 1244000 Ghajar Village (IL); TENETOV, Elena, 3684814 Hafia (IL); ZEYTLIN, Ziv, 2304994 Migdal Haemek (IL)
(74) Representative: HGF
(86) International application number: PCT/IL2021/050888
(87) International publication number: WO 2022/018731

(56) References cited:
- WO-A1-01/64430
- US-A- 5 709 472

## Description

### TECHNOLOGICAL FIELD

The present disclosure concerns time-temperature indicators, more specifically activatable time-temperature indicators that can be activated upon demand.

### BACKGROUND ART

References considered to be relevant as background to the presently disclosed subject matter are listed below:
[1] WO 2006/048412
[2] WO 2008/083926
[3] WO 2009/156285
[4] WO 2013/186782
[5] WO 01/64430 A1 (see detailed discussion below)
[6] US 5 709 472 A (see detailed discussion below)

Acknowledgement of the above references herein is not to be inferred as meaning that these are in any way relevant to the patentability of the presently disclosed subject matter.

### BACKGROUND

Perishable goods, such as food products or pharmaceutical products, typically have a limited lifespan which is indicated to the consumer by a "best before date" label or printing applied onto the package of the perishable goods. However, the actual lifespan of such perishable goods depends mainly on appropriate storage conditions during distribution and storage, as various factors such as humidity, temperature, gas composition, etc., can accelerate deterioration of perishable goods. Hence, a "best before date" indication, which is based on the assumption of proper storage and transport conditions, is often inadequate to reflect the actual state of the perishable good over time.

Temperature abuse is the most frequently observed factor for deterioration of the perishable good, based on diverse physical, chemical, enzymatic and/or microbial processes. Therefore, various technologies have been developed to provide proper indication of the actual state of the perishable good, depending on the exposure to varying temperature conditions.

Time temperature indicators (TTIs) are devices that are developed for such purposes **[1-4]**. TTIs are based on at least one changeable observable physical/chemical property that progresses at a rate that is proportional to time, to temperature or to temperature and time. Such devices can, thus, provide an indication of the time-temperature history (full or partial) of their immediate surroundings when appropriately designed and calibrated. Change in visual physical properties (for example color) of such TTIs is a function of the time, and is temperature-dependent or time-temperature dependent, thus providing an active scale of "freshness" of the product to which it is attached, for example by comparing the color (or shade) of the TTI with a given comparative scale. TTIs can also be designed to provide a distinct "Yes" or "No" type indication regarding the time-temperature factor, and hence can provide a clear-cut indication to save further elaborate data inspection. Therefore, TTI technology can provide a simple tool for controlling perishable goods supply-chain.

TTIs labels are designed to be attached to the perishable good (or to a package thereof) and can provide real-time monitoring, typically in a simple visual manner, of the exposure history of the product to time-temperature, thereby providing indication of the product's freshness condition. Such labels are often based on a chemical reaction taking place between two or more reactants, the rate of the chemical reaction depending on temperature, and resulting in an observable visual change. The device is typically composed of two labels - one containing part of the reactants and the other containing the other part of the reactants, such that when the labels are brought into contact with one another, chemical reaction commences between the reactants (either immediately or after a certain controlled delay). In some arrangements, the TTI device can be provided in the form of two separate labels, and the user brings the two labels into contact with one another in order to initiate the reaction therebetween. In other arrangements, the two labels can be provided as an integral device, with a removable or breakable layer separating between the two labels; removal of the separation layer permits contacting the two labels to initiate the reaction.

WO 01/64430 A1 describes an activatable time-temperature indicator system useful in tracking the thermal exposure history of a temperature-sensitive perishable product and providing a visually-distinct signal, such as a change in color density, at the expiration of a predetermined time-temperature integral comprises a first element, such as a direct thermal printing label comprising a composition having at least a first co-reactant of a color-forming reaction. A second, activator element, such as an adhesive tab capable of being affixed to the label element, comprises an activator component, such as a second co-reactant of the color-forming reaction of a solubilizing agent for prompting the interaction of the co-reactants of the label composition.

US5709472 A describes a time-temperature indicator label for measuring the length of time to which a product has been exposed to a temperature above a pre-determined temperature. The period of time of exposure is integrated with the temperature to which the indicator is exposed. The label is a composite of a plurality of layers adapted to be adhered at its underside to a product container. The label includes a printable surface layer, a longitudinal wicking strip that is adhered underneath the surface layer substantially at the opposite extremities only of the wicking strip and a lower substrate layer forming an envelope with said surface layer. A heat-fusible substance, which melts and flows above a pre-determined temperature, is applied on the surface of the wicking strip contiguous to at least one of the ends of the wicking member. When the heat-fusible substance is exposed to a temperature above the pre-determined temperature, the heat fusible substance flows along the length of the wicking member. The label has a printable surface layer and is sealed at its peripheral edge to the peripheral edge of the substrate layer. These layers encapsulate the wicking member and the heat-fusible substance. The surface layer is provided with a sight window at an intermediate location over the wicking member through which the progress of flow on the wicking member is observed.

### GENERAL DESCRIPTION

The present invention relates to a time-temperature indication (TTI) device, and methods of activating a time-temperature indication (TTI) device as defined according to the appended claims. The present disclosure provides integral TTIs that are easily and simply activable, without the need to align two labels one against the other and/or to remove various separation layers in order to permit contact between two reactants. The TTI devices of the present disclosure are designed to be intuitive for operation by a single action.

Perishable goods are often packed in various packaging, and the shelf life or lifespan of such a perishable good significantly shortens once the package has been opened. The TTI devices of this disclosure can be utilized to indicate primary shelf life of the a perishable good (i.e. in a packaged state) and/or secondary shelf life (after package opening).

While the disclosure below refers to TTI indicators, it is to be understood that the same principles can be applied to also provide temperature indicators, time indicators, temperature threshold indicators, partial TTIs, etc.

In one of its aspects, this disclosure provides a time-temperature indication (TTI) device, that comprises a first element, a second element, and a spacer located between the first and second elements, the TTI device having a non-activated state and an activated state. The first element comprises a substrate film carrying a first reactant layer. The second element comprising a carrier film that has at least one pressable section, the pressable section carries a second reactant layer on at least a portion thereof. The second reactant layer is configured to adhere to the first reactant layer. The spacer is configured to separate between the first element and the second element and has a hollow activation zone that is substantially aligned with the pressable section.

In the non-activated state, at least a portion of the first reactant layer and the second reactant layer are non-contacted (as they are separated by the spacer); while in the activated state, the second reactant layer is adhered to the first reactant layer to enable a reaction between the first and second reactant layers that causes at least one substantially irreversible change in at least one physical property of the device as the reaction is designed such as to be indicative to time-temperature history of the device (and hence also of the perishable good to which the device can be attached). The device is switchable from the non-activated state to the activated state by application of pressure (or force) onto the pressable section to displace it, together with the second reactant layer that is attached thereto, within the hollow activation zone towards the first element and adhere the second reactant layer to the first reactant layer.

In other words, in the non-activated state, at least a segment of the first and second layers are prevented from contacting one another by the spacer. When a user wishes to activate the device, he/she presses onto the pressable section of the second element, thereby displacing the pressable section and the second reactant layer through the hollow activation zone towards the first reactant layer until the second reactant layer comes into contact with and adheres to the first reactant layer, thereby initiating the reaction between the first and second reactant layers in the contact region.

It is to be understood that the device can be activated by the user, by a dispenser that dispenses the TTI devices to be adhered on an article to be monitored, or even by an applicator that applies the TTI device onto the article to be monitored.

The term *pressable section* encompasses any section of a layer that can be pressed and thereby be displaced towards another layer. The displacement can be permanent, i.e., inducing plastic deformation of the pressable section and/or its respective layer, or non-permanent, i.e., inducing elastic deformation of the pressable section and/or its respective layer. It should be appreciated, that when pressing over the pressable section induces plastic deformation (caused by displacement) of the pressable section and/or its respective layer, the pressable section can remain at an intermediate state between its fully deformed and non-deformed states once pressing pressure is relieved.

In some embodiments said intermediate state corresponds to at least 10%, at times 20%, 30%, 40%, 50%, 60%, 70%, 80% or 90% deformation of the pressable section and/or its respective layer, with respect to the non-pressed state thereof.

The pressable section can be deformed or maintain its shape during pressing thereon and/or during displacement thereof. In some embodiments, said pressable section is limited to perform merely elastic deformation under a typical pressing load, i.e., a load applied by a typical human finger, e.g., 30N to 1 10N. In other embodiments said pressable section can be adapted to perform plastic deformation under a typical pressing load, i.e., a load applied by a typical human finger, e.g., 30N to 110N.

In some embodiments a pressable section can be included in any one of the carrier film, the first element, the first reactant layer, the second reactant layer and the substrate film.

It is to be understood that the term *reactant* used herein, unless specifically noted otherwise, is meant to refer to a single chemical entity or to a mixture or composition of two or more chemical entities.

In some embodiments, the rate of the reaction is temperature dependent. In other embodiments the rate of the reaction is both time and temperature dependent, meaning that the rate of the reaction changes with time after activation. Without wishing to be bound by theory, the TTI can provide various dependencies on time and temperature, depending on the nature of the reaction between the first and second reactants. For example, the TTI can provide a gradual change in at least one physical property; alternatively, a non-gradual change in at least one physical property can be provided (i.e. a TTI that has no apparent time-temperature evolution during a first part of its lifespan, while having a significant change during a second part of its lifespan), thus providing a relatively sharper change in properties close to the end of the TTI's lifespan. In some other embodiments, the reaction between the first and second reactants may occur at a given partial temperature range, thus providing indication only when exposed to said temperature range (partial history TTI), or over the entire relevant range of temperatures to be monitored (full history TTI). Hence, the device can provide an indication of partial or full time-temperature history of the device, either in a monotonic or non-monotonic way.

As noted, depending on the rate of reaction between the first and second reactants, some time may pass before the change in the at least one physical property is observable (or apparent to the user). Hence, in further embodiments, the TTI device can comprise an activation indication zone that provides the user with indication that the TTI device has been properly activated.

The reaction between the first reactant layer and the second reactant layer (or between a first reactant contained in the first reactant layer and a second reactant contained in the second reactant layer) causes a substantially irreversible change in at least one physical property of the TTI device. In some embodiments, the physical property is selected from at least one of color, transparency, electric conductivity, reflectance, volume, fluidity, etc.

In some embodiments, the pressable section of the carrier film may be plastically deformable, thus, once pressed, the carrier film maintains its deformation to hold the second reactant layer in contact with the first reactant layer.

In other embodiments, the pressable section of the carrier film is deformable such that it returns, at least partially, to its non-deformed/non-pressed state once the pressing pressure is relieved. In such embodiments, one or both of the first reactant layer and the second reactant layer is designed to be detachable from the substrate film and the carrier film, respectively, as to permit detachment of said first reactant layer and/or the second reactant layer from said substrate film and carrier film, respectively, after adherence of the second reactant layer to the first reactant layer. Due to this detachment, the first and second reactant layers remain adhered to one another after the pressable section returns to its non-deformed/non-pressed state, or any intermediate state between the fully deformed and non-deformed states, when pressure is released from the device.

According to other embodiments, at least a portion of the first element is also pressable or deformable, and said hollow activation zone is configured to accommodate displacement of at least a portion of the first reactant layer thereinto. In other words, according to some configurations, both the first and second elements can be pressed/deformed (in at least sections thereof) in order to oppositely displace the first reactant layer and the second reactant layer into the hollow activation zone.

According to some embodiments, the first reactant layer is detachable from the substrate film, such that adherence to the second reactant layer detaches at least a portion of the first reactant layer from the substrate film. For example, the first reactant layer can be attached to the substrate film by a first adhesive, while the second reactant layer can be composed of a second adhesive in which the second reactant is embedded or dispersed. When the first adhesive has a lower adhesion strength to the substrate than the adhesion strength of that of the second adhesive to the first reactant layer, a detachable portion of the first reactant layer will adhere to the second reactant layer, and as the adhesion strength of the second adhesive to the carrier film is stronger than that of the first adhesive to the substrate film, the detachable portion of the first reactant layer will adhere to the second reactant layer and detach from the substrate film, thus ensuring that the first and second reactant layers remain adhered to one another and to the pressable section when the pressable section substantially returns to its non-pressed state or any intermediate state between the fully deformed and non-deformed states.

The term *adhesion strength* denotes the interfacial strength between adhesive and the material to which it is attached.

It is to be noted that while, in some embodiments, the various layers and sub-layers are adhered one to the other, it is also contemplated within the scope of the present disclosure that at least some of the layers (and/or sub-layers) may be attached to one another by means other than adhesives, for example by welding or other bonding techniques, as long as the functionality of the device disclosed herein is maintained.

According to other embodiments, the second reactant is detachable from the carrier film, such that adherence to the first reactant layer detaches the second reactant layer from the carrier film when the pressable section returns to its non-pressed state or any intermediate state between the fully deformed and non- deformed states. For example, the second reactant layer can be attached to the carrier film by an intermediate adhesive, while the second reactant layer can be made of (or comprise) a second adhesive in which a second reactant is embedded or dispersed. When the intermediate adhesive has a lower adhesion strength to the carrier film than that of the second adhesive to the first reactant layer, the second reactant layer will adhere to the first reactant layer, and as the adhesion strength of the second adhesive to the first reactant layer is stronger than to the intermediate adhesive to the carrier film, the second reactant layer will attach to the first reactant layer and detach from the carrier film, thus ensuring that the second reactant layer remains adhered to the first reactant layer when the pressable section substantially returns its non-pressed state or any intermediate state between the fully deformed and non-deformed states.

According to further embodiments, a release layer may separate between detachable portions/layers and their carrying surfaces (e.g. the carrier film and/or the substrate film) that facilitates detachment of detachable portions/layers from their carrying surfaces. For example, presence of a release layer between the second reactant layer and the carrier film can facilitate detachment of the second reactant layer from the carrier film when the second adhesive has a higher adhesion strength to the first reactant layer than to the release layer. In some other embodiments, the carrier film can be constituted by such a release layer or can be coated with a coating functioning as a release layer.

In some embodiments, a release layer may be located between the first reactant layer and the substrate film, that facilitates detachment of the first reactive layer from the substrate film.

The term *release layer* refers to a layer having a surface that binds less effectively to an adhesive compared to the adhesive's binding to a target surface. The term also means to denote a coating functioning as a release layer; in other words, a layer that is coated by a material functioning to reduce adhesion strength of an adhesive thereto.

In some embodiments, the carrier layer is (or is coated by a suitable coating to function as) a release layer.

The release layer may, for example, be made of or coated by a silicon-based or fluorinated polymer, or can even be a siliconized or fluorinated surface or any other suitable surface.

In some embodiments, both the first reactive layer and the second reactive layer are associated, respectively, to the substrate film and the carrier film via release layers.

The substrate film of the first element can be made of any suitable material and have any desired shape or form. The substrate film can be flexible or rigid, may be substantially two-dimensional (a thin flat substrate) or a three-dimensional curved (non-flat) surface. The substrate film is typically made of a polymeric material, such as polysiloxanes, polyethylene (low-density polyethylene, medium-density polyethylene, high-density polyethylene, or linear low-density polyethylene), polypropylene (biaxially oriented film (BOPP), monoaxially oriented, or uniaxially oriented films), polyester, polyamide, copolyimide, polyimide, polyvinyl chloride (with or without a plasticizer), cellulose acetate, cellulose derivatives (e.g. cellophane), polytetrafluoroethylene (PTFE), vinyl fluoride, PVC (polyvinyl chloride), PVDF (polyvinylidene fluoride), PTFE (polytetrafluoroethylene or Teflon), polystyrene, phenol-formaldehyde resin, para-aramid fibers, etc.

The substrate film can be clear or opaque, colorless, colored (having any CIE-Lab color value) or printed. The substrate film may can be transparent, semitransparent, or hazed. In some embodiments, the substrate is (or can function as) a release layer for the first reactant layer; in other words, the substrate can be made of or coated by a material that binds less effectively to the first reactant layer compared to the binding between the first and second reactant layers. This enables the first reactant layer to detach from the substrate layer when the pressable section returns to its substantially non-pressed state after the second reactant layer comes into contact with and adheres to the first reactant layer.

In some embodiments, the first reactant layer may cover substantially the entire surface of the substrate layer. In other embodiments, the second reactant layer may cover substantially the entire surface of the pressable section that faces the first reactant layer. In some other embodiments, the second reactant layer covers one or more surface portions of the surface of the pressable section that faces the first reactant layer. The one or more surface portions may be of any size, shape and structure, the surface portions may be continuous or comprise of several non-continuous sub-portions on the surface, e.g. forming a pattern, a pictogram, signs, lettering, etc. As a mere non-limiting example, when the second reactant layer is in the form of lettering, reaction between the first and second reactant layers can occur only at the contact areas, thereby resulting in a visual indication in the form of appearance, disappearance or change in color or in the shape of letters.

The reaction between the first and second reactants in each of the surface portions may have the same rate (or same time-temperature dependency), or may be tailored to have different reaction rates such that the change (and/or rate of change) in each surface portion will be different than that in other surface portions. The reaction between the first and second reactants in each of the surface portions may have the same temperature sensitivity of the reaction rate, or may be tailored to have different temperature sensitivities of the reaction rates such that the change (and/or rate of change) in each surface portion will be different than that in other surface portions upon changing temperature.

The reaction between the first and second reactant layers can be any reaction that causes at least one physical substantially irreversible change in the device. The reaction can be selected from acid-base reaction, redox reaction, complexation, etching, dissolution, crystallization, phase change, acid - metal oxide reactions, acid-metal reactions, replacement reactions, base - metal oxide reactions, base-metal reactions, etc.

In some embodiments, the reaction between the first and second reactant layers is an etching reaction, i.e. one of the first and second reactant layers comprises an etchable reactant, while the other one of the first and second reactant layers comprises an etching reactant.

According to some embodiments, the first reactant layer comprises a metal-containing sub-layer, the metal constituting the first reactant (e.g. an etchable reactant); for example such a metal-containing sub-layer can be in the form of metal particles embedded in wax, metal particles embedded in phase-change material, metal particles embedded in polymeric matrix, or made of metallic ink. The metallic particles may be in the form of spheres having an average diameter ranging from 1-1000 nm (nanometers), preferably ranging from about 3nm to about 1000 nm. Alternatively, the metallic particles may be in the form of discs, lamella or any other shape, typically 1-1000 nm thick and 0.01-100 microns wide.

In other embodiments, the metal-containing sub-layer (to be interchangeably referred to herein also as a *metallic sub-layer*) may be made of a metal (i.e. a continuous metal film). In other embodiments, the first reactant layer is constituted by a metalized polymeric film. The metalized polymeric film comprises a metallic film deposited atop a polymeric film, for example by physical vapor deposition (PVD). When first reactant layer comprises a metal sub-layer or is constituted by a metalized polymeric film, the thickness of the metal sub-layer (or the metal film coating the polymeric film) can range between about 5 Å (Angstrom) and about 1000 Å. The thickness of the metalized film can be, for example, 1 nm to 1 mm, and preferably from 5 nm to 500 µm.

The metal can be coated with oxides, sulfides or other metal complexes and salts, either through natural or synthetic coating processes. In other embodiments the metal can be coated with an organic layer that is destructible and/or penetrable by one or more components of the second reactant.

In some embodiments, the second reactant layer can comprise an etchant sub-layer which is constituted by an adhesive matrix into which an etchant is embedded or dispersed. In some other embodiments, the etchant sub-layer may be made of an adhesive matrix which constitutes said etchant. In some other embodiments, the second reactant layer can be constituted by an adhesive matrix comprising one or more etchants.

The etchant is typically selected to etch the metal component in the first reactant layer at a desired time or time-temperature dependent rate. In some embodiments, the etchant can be selected from phosphoric acid (H₃PO₄), phosphorus acid (H₃PO₃), hydrochloric acid (HCl), nitric acid (HNO₃), sulfuric acid (H₂SO₄), hydrofluoric acids (e.g. HF, HBF₄), polyphosphoric acid, pyrophosphoric acid, phosphonic acid, alkylphosphonic acid (and derivatives thereof), aryl sulfonic acids alkyl sulfonic acids (and derivatives thereof), Poulton's reagent (mixture of HCl_{(conc)} and HNO_{3(conc)}), heteropoly acids (such as phosphotungstic acid (PWA) and silicotungstic acid (SiWA)), basic solutions (e.g. KOH, NaOH, amines), ferric chloride (FeCl₃), copper sulfate (CuSO₄), copper chloride (CuCh), potassium ferricyanide (K₃(FeCN)₆), potassium permanganate solutions (for example KMnO₄ in basic water and a wetting agent), aqueous solutions of chromium (VI) oxide (1%), reagents solutions (such as HCl, FeCl₃ in H₂O or 95% ethanol; H₂O, HCl, ammonium persulfate; chromic acid, sodium sulfate, hydrochloric acid, water; H₃PO₄, carbitol (diethylene glycol monoethyl ether), boric acid, oxalic acid, HF, water; NaOH, NaF, water; tetramethyl ammonium hydroxide (TMAH, (CH3)₄NOH) and KOH; water, ammonia and hydrogen peroxide (30%), sodium molybdate, HCl, ammonium bifluoride and water), and any mixture or combination thereof.

When the reaction between the first and second reactant layers is based on etching, the metal component (either in particulate form or as a film) of the first reactant layer is typically selected from aluminum, copper, silver, iron, magnesium, titanium, tin, chromium, zinc, nickel, and alloys of these metals. In some embodiments, the metal is aluminum. Without wishing to be bound by theory, the oxide layer naturally formed, or added on the surface of aluminum can substantially prevent the metal from further reacting with oxygen, moisture and other reactants that may be present in the atmosphere. In some embodiments, the metal layer is protected from such undesirable reactions with oxygen, moisture and alike materials, sometimes present in the atmosphere by coating it with a thin layer (e.g. a mono-layer) of long thiols, such as for example 1-n-octadecanethiol and/or disulfide, such as di-n-octadecyl disulfide, layer.

The first reactant layer can further comprise one or more destructible, permeable or semi-permeable barrier sub-layers, formed atop of the metal-containing sub-layer. Such permeable or semi-permeable sub-layer is designed to have a defined permeability to the second reactant (e.g. the etchant), thus can modify the rate and/or temperature sensitivity of the physical change in the TTI device. For example, the first reactant layer can be a metal (e.g. aluminum) that may be coated by an oxide (native oxide or an oxide of another metal) or a sulfide layer, and hence etching will typically commence only after dissolving, demolishing, removing or penetrating the coating before reaction between the metal and the etchant occurs, thus elongating the time required for the physical change to be observed. By another example, a semi-permeable sub-layer can elongate the time required for the second reactant to contact the first reactant (after the second reactant layer has adhered to the first reactant layer), thereby adjusting the rate of physical change in the TTI device that is applied onto perishable good that has a relatively long shelf-life or lifespan (pharmaceuticals for example). The barrier layer may also alter the temperature sensitivity of the rate of appearance of the physical change in the TTI device. Non-limiting examples of such permeable or semi-permeable sub-layer(s) may be cellulose derivatives (such as cellulose acetate butyrate), polyacrylates, polyepoxides, polyurethanes, polystyrenes, polyimidazoles, etc.

The destructible, permeable or semi-permeable barrier sub-layer(s) may have a uniform thickness or variable thickness across the surface of the first reactant layer, e.g. may have a gradually changing thickness or may have zones that differ in thickness from adjacent zones. Such differences in thickness of the barrier sub-layer(s) can permit different elongation periods of the reaction between the first and second reactants at different zones of the device. A similar effect can be obtained by utilizing different types barrier sub-layers in different zones across the surface of the first reactant layer, each type of barrier sub-layer providing different reaction elongation time.

As noted, the reaction between the first and second reactant layers causes one or more physical substantially irreversible changes in the TTI device. In some embodiments, this change is an observable change in the color of at least a portion of the device. This can be obtained by tailoring the reaction between the first and second reactant layers to produce reaction products of a distinct color. Alternatively, when the reaction is based on metal etching, the change in color can include change in light reflectance of the metal (for example turning from metallic sheen to a mat appearance). As the thickness of the metal layer or sub-layer in the first reactant layer decreases with progression of the etching reaction, the metal becomes increasingly light transmissive. Hence, the change in transparency of the metal layer or sub-layer can reveal any coloring, lettering, patterning, etc. that is obscured by the metal (in cases where the reaction products do not hinder light transmittance). Thus, in some embodiments, the first reactant layer further comprises a colored or printed indication sub-layer disposed between the substrate film and the metal-containing sub-layer. In other embodiments, the metallic sub-layer is a metalized polymeric film (i.e. a polymer film coated by a metal film), the polymer film being colored or being printed at a non-metalized surface thereof. In other embodiments, the metallic sub-layer is printed at a top and/or a bottom surface thereof. When the metal is etched and gradually becomes transparent due to reduction in its thickness, the color or printed indication is exposed to the user, serving as the physical change in the TTI device that provides the desired time-temperature history indication.

In some embodiments the observed physical change in the TTI device originates from more than one component of the TTI. For example, in some embodiments, as the metallic layer or sub-layer is etched away and thins, it changes its optical properties from substantially opaque metallic reflector to a semi-transparent black layer. In the latter, the observed color is a combination of the color of the semi-transparent thin metal layer and the color of the layer or layers residing underneath. At the end of the etching process, in cases where the etched metal produces colorless, substantially light transmissive products, the observed color is mostly the function of the color of the layer or layers residing underneath.

When the desired physical change in the TTI device is a visual change, at least some of the parts of the device need to permit the user to view the physical change. Thus, in some embodiments, the pressable section of the carrier film can be transparent, clear (i.e. having no color, or colored however clear as to permit light transmission therethrough), or semi-transparent.

In some arrangements, the physical change is a color change, and the user needs to compare the color formed in the reaction zone between the first and second reactant layers to a calibrated reference color in order to determine whether the device indicates that the perishable good to which it is attached is usable or not. Therefore, the TTI device can comprise one or more reference color zones. Such reference color zones will be typically formed adjacent the pressable section of the carrier film. By some embodiments, at least a portion of the carrier film, save the pressable section, comprises at least one of lettering, color blocks, color scale, pictograms, ornaments, etc.

In some embodiments, the carrier film is coated by a protective coating which seals the TTI device against environmental factors, such as moisture. In other embodiments, the TTI device is encapsulated by an encapsulation layer. In yet other embodiments, the topmost and bottom-most layers of the device are joined (e.g. through an adhesive or by welding) to form an enclosed TTI device that is isolated from various environmental conditions (e.g. moisture). In some other embodiments, the carrier layer and/or the substrate layer are also protective layers that prevent humidity and/or other environmental factors from effecting the device's operation. The protective layer(s) is typically transparent.

Some non-limiting examples of protective layer(s) may include water-sealing polyurethane, polyvinyl chloride, poly chlorotrifluoroethylene, bilayer laminates of polyvinyl chloride and poly chlorotrifluoroethylene, trilayer laminates of polyvinylchloride-polyethylene-polychlorotrifluoroethylene, glycolised polyethylene terephthalate (PETG), polychlorotrifluoroethylene (PCTFE), bilayer laminates of PETG and PCTFE, polyvinyl chloride with PCTFE (or with another suitable barrier film material), ethylene-vinyl alcohol copolymers (EVOH), trilayer laminations of PETG - PCTFE - EVOH, or any other suitable protective layers.

The spacer can be of any shape or form as to permit effective separation between the first and second elements, however still defining said hollow activation zone in a sufficient size as to permit displacement of the pressable section therein. The spacer can have any cross-sectional shape, can be uniform or non-uniform along its length dimension. In some embodiments, the spacer is in the form of a ring; in such embodiments, the spacer can have an internal circumference that is continuous and an external circumference that is interrupted, and *vice versa.* In other embodiments, the spacer can be structured of two or more elements, forming a continuous ring contour or non-continuous ring contour. The outer circumference of the ring can be of any shape, e.g. circular, oval, triangular, rectangular, polygonal, abstract, etc. The circumference of the hollow activation zone defined in the spacer can have any shape, independent of the shape of the outer circumference of the spacer. In some embodiments, the outer circumference of the spacer and the circumference of the hollow activation zone defined in the spacer have the same shape.

The spacer can be made of any suitable material, for example thermoplastic polymers (e.g. polypropylene, polyethylene, etc.), thermosetting polymers, elastomeric polymers, polymeric foams, rubber, metal or metalized polymeric film, UV curable material, UV curable ink, UV curable coating, solvent-based ink, water-based ink, etc.

In some embodiment, the spacer has a thickness ranging between about 5 and about 2000 µm, preferable 20-800 µm.

In order to permit application of the TTI device onto the perishable good or a package thereof, the first element can be configured for attachment to a surface of the perishable good or packaging. In some embodiments, the first element comprises a package-attaching adhesive layer, formed on an outer (product-facing) surface of the first element. The package-attaching adhesive layer can be coated with a removable release layer that can be removed by the user before attaching the TTI to the desired article or product.

In an example, there may be provided a time-temperature indication (TTI) device, comprising: a first element comprising a substrate film carrying a first reactant layer, at least a portion of the first reactant layer being attached to the substrate film by a first adhesive; a second element comprising a carrier film having at least one flexible section, said flexible section carrying a second reactant layer on at least a portion thereof, the second reactant layer comprises a second adhesive in which a second reactant is embedded or dispersed, the second adhesive having a higher adhesion strength to the carrier film than the first adhesive to the substate film; a spacer configured to separate between the first element and the second element, and having an hollow activation zone substantially aligned with said at least one flexible section; the device having a non-activated state, in which the first reactant layer and the second reactant layer are non-contacted, and an activated state, in which said second reactant layer is adhered to at least a portion of said first reactant layer to enable a reaction therebetween that causes at least one substantially irreversible change in physical property of the device, said reaction being indicative to time-temperature history of the device, the device being switchable from the non-activated state to the activated state by application of force onto said flexible section to displace said flexible section within the hollow activation zone towards said first element, adhere the second reactant layer to the first reactant layer and detach said at least one portion of first reactant layer from the substrate film.

For example, there may be provided a time-temperature indication (TTI) device, comprising: a first element comprising a substrate film carrying a first reactant layer; a second element comprising a carrier film having at least one flexible section, a second reactant layer being adhered to said flexible section by an intermediate adhesive, the second reactant layer comprises a second adhesive in which a second reactant is embedded or dispersed, the second adhesive having a higher adhesion strength to the first reactant layer than to the intermediate adhesive; a spacer configured to separate between the first element and the second element, and having an hollow activation zone substantially aligned with said at least one flexible section; the device having a non-activated state, in which the first reactant layer and the second reactant layer are non-contacted, and an activated state, in which said second reactant layer is adhered to at least a portion of said first reactant layer to enable a reaction therebetween that causes at least one substantially irreversible change in physical property of the device, said reaction being indicative to time-temperature history of the device, the device being switchable from the non-activated state to the activated state by application of force onto said flexible section to displace said flexible section within the hollow activation zone towards said first element, adhere the second reactant layer to the first reactant layer and detach said second reactant layer from the carrier film.

While in the TTI devices described hereinabove the pressable section has been described to be a part of the second reactant layer, it is also contemplated that the pressable section may be a part of the first reactant layer.

Hence, for example, there may be provided a time-temperature indication (TTI) device, that comprises a first element, a second element, and a spacer located between the first and second elements, the TTI device having a non-activated state and an activated state. The first element comprises a substrate film carrying a first reactant layer over at least a pressable section thereof. The second element comprising a carrier film, carrying a second reactant layer on at least a portion thereof. The second reactant layer is configured to adhere to the first reactant layer. The spacer is configured to separate between the first element and the second element and has a hollow activation zone that is substantially aligned with the pressable section.

In the non-activated state, the first reactant layer and the second reactant layer are non-contacted (as they are separated by the spacer); while in the activated state, at least a portion of the second reactant layer is adhered to at least a portion of the first reactant layer to enable a reaction between the first and second reactant layers that causes at least one substantially irreversible change in at least one physical property of the device as the reaction is designed such as to be indicative to time-temperature history of the device (and hence also of the perishable good to which the device can be attached). The device is switchable from the non-activated state to the activated state by application of pressure (or force) onto the pressable section of the first reactant layer to displace it, within the hollow activation zone, towards the second element and adhere the first reactant layer to the second reactant layer.

In such embodiments, the first reactant layer is typically configured to be detachable from the pressable section once contacted and adhered to the second reactant layer.

In an embodiment, this disclosure provides an indication device, comprising: a first element comprising a substrate film carrying a first reactant layer; a second element comprising a carrier film having at least one pressable section, said pressable section carrying a second reactant layer on at least a portion thereof, the second reactant layer configured to adhere to the first reactant layer; and a spacer configured to separate between the first element and the second element, and having a hollow activation zone substantially aligned with said at least one pressable section. The device has a non-activated state, in which the first reactant layer and the second reactant layer are non-contacted, and an activated state, in which said second reactant layer is adhered to at least a portion of said first reactant layer to enable a reaction therebetween that causes at least one substantially irreversible change in physical property of the device, the device being switchable from the non-activated state to the activated state by displacing the pressable section into the hollow activation zone towards said first element to cause adhering of the second reactant layer to the first reactant layer, the reaction being indicative to time-temperature history, temperature history, or time history of the device.

In some embodiments, one or both of the first reactant layer and the second reactant layer is detachable from the substrate film and the carrier film, respectively, to permit detachment of said first reactant layer and/or second reactant layer from said substrate film and carrier film, respectively, after adherence of the second reactant layer to the first reactant layer.

The TTI devices of this disclosure are typically integral devices, i.e. devices in which all of the elements and layers are provided to the user as a single unit device.

However, in other embodiments, the first element, the second element and the spacer can be separately provided (each alone or as a kit) to be assembled into a TTI device at a manufacturer's production site or by a user.

In some embodiments the TTI is a multi-step time-temperature indicator (TTI) comprising a multi-layer system having a substrate film carrying a first reactant layer; a second element comprising a carrier film having at least one pressable section, said pressable section carrying a second reactant layer on at least a portion thereof, the second reactant layer configured to adhere to the first reactant layer, and a barrier layer between said first and second reactant layer, wherein said barrier layer defines two or more segments within said multi-step TTI, each segment being distinguished from one another by any one or combination of thickness, composition and absence of barrier material. In some embodiments said two or more segments are selected such to provide a staircase time-temperature behavior.

In some embodiments said two or more segments provide a step-wise disappearance of one segment after another.

Another embodiment provides an article of manufacture comprising one or more indication devices (e.g. TTIs) disclosed herein. The article can be a perishable good, a packaging of a perishable good, or any other article being or containing a temperature-sensitive and/or time-sensitive product or component.

The article of manufacture can comprise one or more packaging and a perishable good packaged in said packaging. In an article of manufacture, one or more TTI devices can be used, i.e. on the external packaging and/or on the internal packaging that contains the perishable good. Each of the TTI devices can reflect a different time-temperature dependent behavior to correlate to a primary or secondary shelf life of the perishable good. For example, one TTI device as described herein can be attached to an external cardboard box of a cosmetic cream and indicating the primary shelf life of the cream (namely, the shelf life of the product/packaging until the package is opened), and another TTI device attached to the internal glass or plastic container that holds the cosmetic cream, which is activable when the package is opened to indicate the secondary shelf life of the cosmetic cream. It should be noted that the two TTIs may also be in the form of a single device in which the secondary shelf life indicator is activated upon opening the package.

By another aspect, there is provided a method of activating a time-temperature indication (TTI) device, the method comprises displacing a pressable section of a carrier film of a second element of the TTI device towards a first reactant layer of a first element of the TTI device, the pressable section carrying a second reactant layer on at least a portion thereof which is configured to adhere to the first reactant layer, said displacing being through a hollow activation zone that is substantially aligned with said at least one pressable section and being defined in a spacer configured to separate between the first element and the second element, and said displacing causing adhering of the second reactant layer to the first reactant layer to activate a reaction therebetween, the reaction causing at least one substantially irreversible change in physical property of the device that is indicative to time-temperature history of the device.

In some embodiments, the method may further comprise displacing at least a portion of the first reactant layer into the hollow activation zone towards the second reactant layer. In such embodiments, displacing said portion of the first reactant layer into the hollow activation zone may be carried out concomitantly with pressing of the pressable section of the second element.

By a further aspect, there is provided a method of activating a time-temperature indication (TTI) device, the method comprises displacing a pressable section of a substrate film of a first element of the TTI device towards a second reactant layer of a second element of the TTI device, the pressable section carrying a first reactant layer on at least a portion thereof, the second reactant layer being configured to adhere to the first reactant layer, said displacing being through a hollow activation zone that is substantially aligned with said at least one pressable section and being defined in a spacer configured to separate between the first element and the second element, and said displacing causing adhering of the first reactant layer to the second reactant layer to activate a reaction therebetween, the reaction causing at least one substantially irreversible change in physical property of the device that is indicative to time-temperature history of the device.

According to some embodiments, the method further comprises displacing at least a portion of the second reactant layer into the hollow activation zone towards the first reactant layer. In such embodiments, displacing said portion of the second reactant layer into the hollow activation zone may be carried out concomitantly with pressing of the pressable section of the first element.

As used herein, the term *about* is meant to encompass deviation of ±15% from the specifically mentioned value of a parameter, such as temperature, pressure, size, etc.

Whenever a numerical range is indicated herein, it is meant to include any cited numeral (fractional or integral) within the indicated range. The phrases *ranging*/*ranges between* a first indicate number and a second indicate number and "ranging/ranges from" a first indicate number "to" a second indicate number are used herein interchangeably and are meant to include the first and second indicated numbers and all the fractional and integral numerals therebetween.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Figs. 1A-1C** are schematic cross-sections of a TTI device according to an embodiment of this disclosure in a non-activated state (Fig. 1A), a transient position (Fig. 1B) and an activated state (Fig. 1C).
**Figs. 1D-1E** are schematic cross-sections of variations of the TTI device according of Figs 1A-1C.
**Figs. 2A-2D** are schematic top views of a TTI device according to an embodiment of this disclosure, as viewed by the user, at a non-activated state (Fig. 2A) and at various stages after activation (Fig. 2B-2C) until the device indicates that the perishable good is no longer usable (Fig. 2D).
**Figs. 3A-3D** are schematic cross-sections of a TTI device according to a variation of the embodiment shown in Figs. 1A-1C however also including a release layer between the second reactant layer and the carrier film - in a non-activated state (Fig. 3A), a transient position (Fig. 3B) and an activated state (Figs. 3C-3D).
**Fig. 3E** is a schematic cross-sections of a variation of the TTI device according of Figs 3A-3D.
**Figs. 4A-4C** are schematic cross-sections of a TTI device according to another embodiment of this disclosure in a non-activated state (Fig. 4A), a transient position (Fig. 4B) and an activated state (Fig. 4C).
**Figs. 5A-5C** are schematic cross-sections of a TTI device according to a variation of the embodiment shown in Figs. 4A-4C, however also including a release layer between the first reactant layer and the substrate film - in a non-activated state (Fig. 5A), a transient position (Fig. 5B) and an activated state (Fig. 5C).
**Figs. 6A-6B** are schematic cross-sections of a TTI device according to another embodiment of this disclosure, with a plastically deformable pressable section, in a non-activated state (Fig. 6A) and an activated state (Fig. 6B).
**Figs. 7A-7B** are schematic cross-sections of a TTI device according to another embodiment of this disclosure, in which both the first element and the second element have elastically deformable pressable sections, in a non-activated state (Fig. 7A) and an activated state (Fig. 7B).
**Figs. 8A-8B** are schematic cross-sections of a TTI device according to another embodiment of this disclosure, similar to the embodiment of Figs. 7A-7B, however also comprising a barrier membrane between the first and second elements - in a non-activated state (Fig. 8A) and an activated state (Fig. 8B).
**Figs. 9A-9B** are schematic cross-sections of a TTI device according to another embodiment of this disclosure.

### DETAILED DESCRIPTION OF EMBODIMENTS

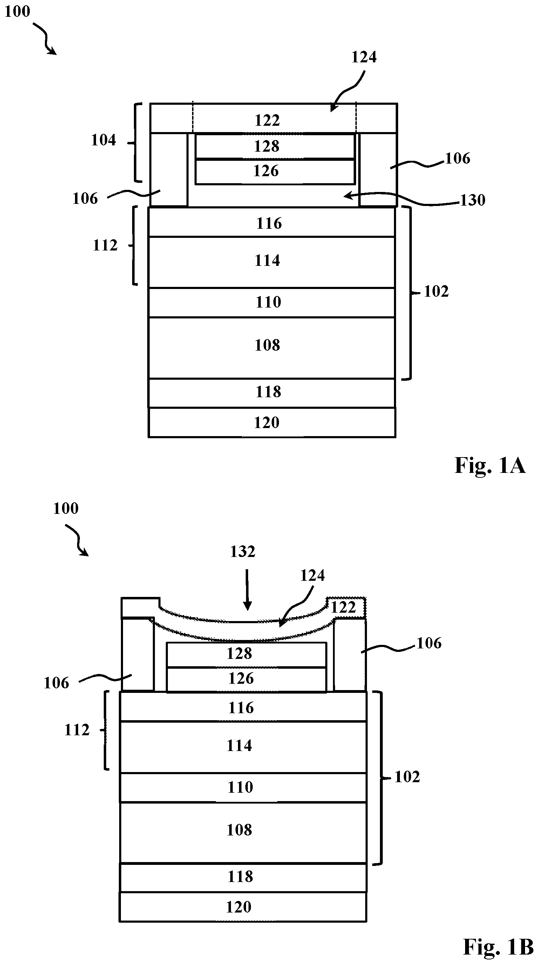

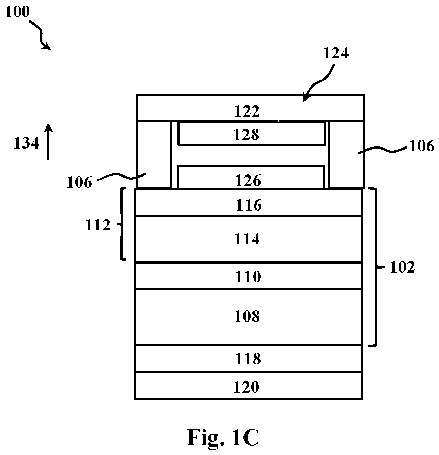

In Figs. 1A-4B, some representations of TTI devices according to this disclosure will be exemplified. It is to be understood that the various element of the devices are schematically represented and are not indicative of any specific scale or size.

Further, in the examples herein, the reaction between the first and second reactant layers (or first and second reactants) is a metal-etching mechanism. However, it is to be understood that these are merely provided for exemplifications of the principles of operation of the TTI devices described herein, and any other suitable type of reaction between the first and second reactants are encompassed by this disclosure.

Turning first to Figs. 1A-1C, shown is a schematic representation of a TTI device according to an embodiment of this disclosure, at its non-activated and activated operational states.

TTI device **100** comprises a first element **102** and a second element **104**, separated by a spacer **106**. First element **102** comprises a substrate film **108**, onto which a first reactant layer **112** is adhered by a first adhesive **110.** In this exemplified embodiment, first reactant layer **112** is a metalized polymeric film comprising a polymeric film **114** coated by a thin metal (e.g. aluminum) film **116.** Metal film **116** constitutes the first reactant of this embodiment. In order to permit the device to be attached to a perishable good or to an article of manufacture, substrate **108** is typically coated by package-attaching adhesive layer **118**, which is covered by a user-removable protective release layer **120.** For attaching the TTI device to the perishable good, a user needs to peel release layer **120** of the package-attaching adhesive layer **118**, and attach the device to the perishable good or to a packaging thereof.

Second element **104** comprises carrier film **122** that has a pressable section **124** (the pressable section being an integral part of the carrier film), the function of which will be described below. The pressable section **124** is attached to a second reactant layer **126**, which comprises or consists of a second reactant. In this specific example, the second reactant is a pressure-sensitive adhesive matrix in which an etchant is dispersed. In this example, the second reactant layer **126** is attached to the carrier film **122** by an intermediate adhesive **128**.

The spacer **106** has a hollow activation zone **130** that is aligned with the pressable section **124**, and is sized to permit the displacement of the second reactant layer **126** therein when the pressable section **124** is deformed for activation of the device **100**, as will now be explained.

In Fig. 1A, the TTI device **100** is at its non-activated state, in which the first reactant layer **102** and the second reactant layer **104** are non-contacted and separated by spacer **106**.

For activating the TTI device, a user applies force onto the pressable section **124** (represented by arrow **132** in Fig. 1B), thereby pressing (or elastically deforming) the pressable section and causing the second reactant layer **126** to be displaced through hollow activation zone **130** towards the first reactant layer **112**. Once the second reactant layer **126** and the first reactant layer **112** are contacted, the second reactant layer **126** (being or comprising an adhesive matrix) adheres to metal film **116** of the first reactant layer **112**.

In this example, the second reactant layer **126** has lower adhesion strength to intermediate adhesive **128** than to first reactant layer **112** (more specifically to the metal film **116**). Hence, once second reactant layer **126** is adhered to metal film **116**, and pressable section **124** returns to its non-pressed state (in the direction of arrow **134**), or any intermediate state between the fully deformed and non- deformed states, due to its elasticity, second reactant layer detaches from the intermediate adhesive **128** and remains adhered to metal film **116**, and the TTI device is activated.

By this simple mechanism, a user merely needs to slightly press on the pressable section **124** to cause displacement of the second reactant layer **126** until it adheres to metal layer **116** in order to activate the device.

The contacting between the second reactant layer **126** and the first reactant layer **112** causes the beginning of a reaction between the etchant in the second reactant layer and metal film **116**. The reaction rate depends on time and temperature, and hence can be used to indicate the time-temperature behavior of the perishable good to which the device is attached. In order to provide an easily identified indication, the device is designed such that the reaction between the first and second reactants (e.g. between the metal and the etchant) causes at least one irreversible physical change in the device.

For example, one or both of the substrate film **108** and the polymeric film **114** can be colored or printed with any type of marking (e.g. lettering, pattern, signs, etc.). As metal film **116** is etched, it becomes thinner. Below a certain threshold thickness, metal film **116** becomes transparent, thereby exposing the color or printing of substrate film **108** and/or the polymeric film **114.** The pressable section **124** is transparent, semi-transparent or clear, and hence a user can view the appearance of color or printing in the device following etching of metal film **116** - providing an indication to the user of the usability of the perishable good.

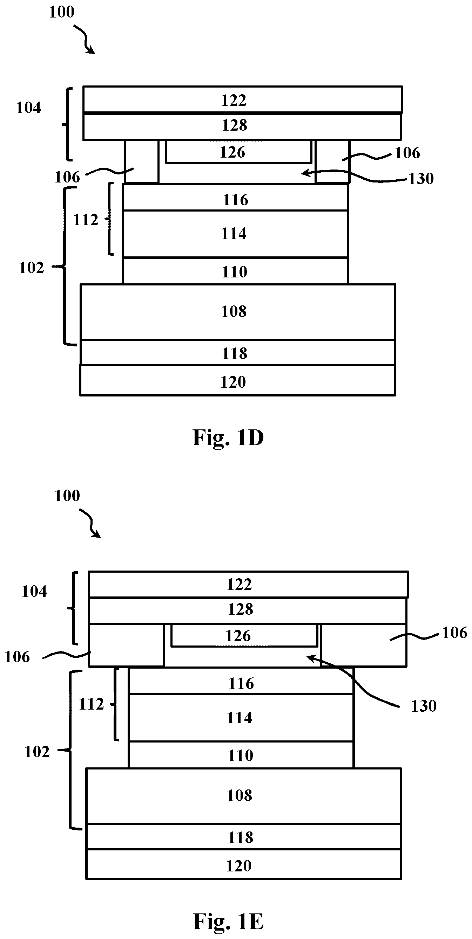

A variation of this embodiment is shown in Fig. 1D. In the variation of Fig. 1D, intermediate adhesive **128** is also used to adhere the second element **104** to the spacer. Further, carrier film **122** and substrate film **108** are extended, such that their ends can be attached together in order to form a protective capsule around the active zone of the device, thus isolating the device from environmental effects (such as moisture). Extended carrier and substrate films **122** and **108,** respectively, can be attached at their ends by any suitable method, e.g. adhering, welding, hot lamination, ultrasonic welding, etc. For such purposes, carrier and substrate films **122** and **108** may be made of or be coated by a material suitable for the desired attachment method.

In the variation of Fig. 1E, spacer **106** is extended and can be made of a material that is suitable for hot lamination, welding, ultrasonic lamination, etc., such that sealing of the active zone of the device can be obtained between extended substrate **108** and spacer **106**.

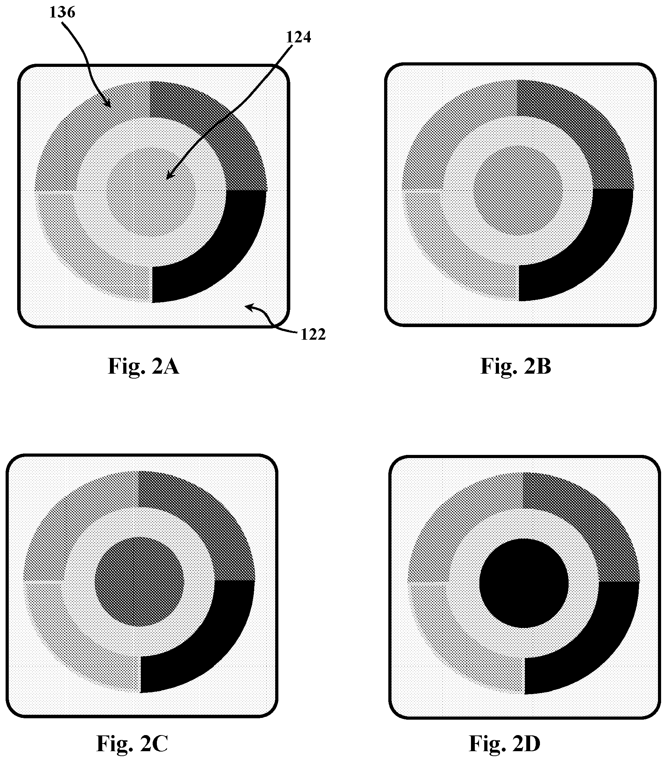

An exemplary TTI device at its various operational states is shown in Figs. 2A-2D. In this example, the TTI device provides indication to the user about the time-temperature history of the perishable good by a visual observable change in the color of the active area of the TTI. Pressable section **124** is clear (or transparent) and therefore a user can view the change in color resulting from the advancement of the reaction between the first and second reactants (in this example between the etchant and the metal film). To permit accurate reading of the color, carrier layer **122** is printed with reference color blocks **136**, such that the user can easily compare between the color developed beneath pressable section **124** and the reference colors **136**, thus obtaining an indication of the usability of the perishable good. In this specific example, the color blocks **136** provide a graduated color index that matches the color development as a result of the reaction between the etchant and the metal. As can be seen, before activation (Fig. 2A), the color beneath pressable section **124** observable by the user is light. After activation, and depending on time and temperature, the color becomes darker (Fig. 2B-2C), until turning dark (Fig. 2D), indicating that the perishable good is no longer usable.

While in this specific example the physical change in the device is a color change from bright to dark, it is well understood that any other color change is encompassed by this disclosure (for example dark to bright, change of shade, change from one color to another, change in reflectance, appearance/disappearance of lettering, patterns, pictograms or signs, etc.).

Further, while in this example a plurality of reference color blocks is shown, it is to be understood that only a single-color block can be used. In some configurations, no reference color blocks are present and the change in color of the device may be identified without any comparison to a reference color.

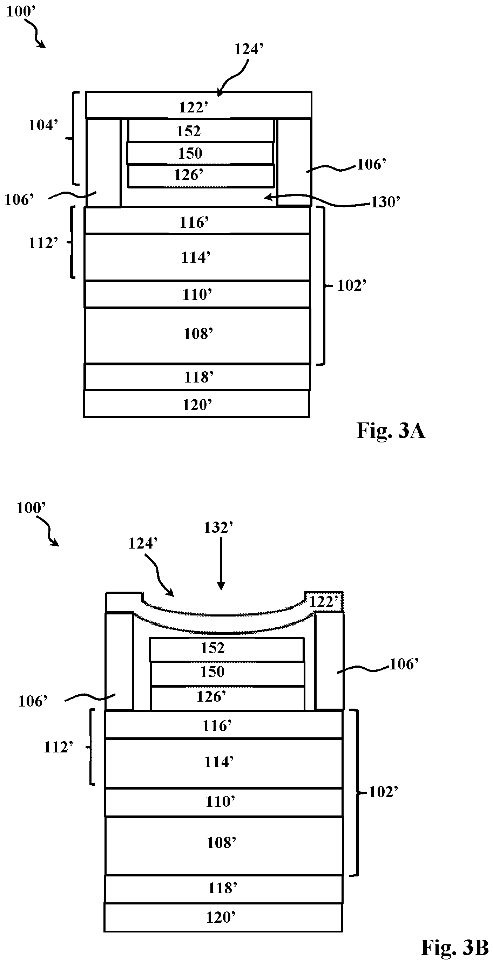

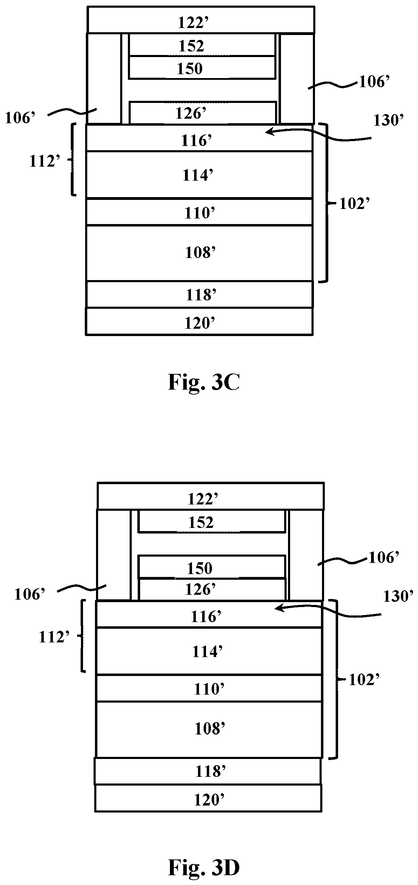

A variant of the exemplary configuration of Figs. 1A-1C is shown in Figs. 3A-3C (elements having the same function as those in Figs. 1A-1C are marked in Figs. 3A-3C with a " ' " marking; the reader is directed to the description of Figs. 1A-1C for full understanding of the functionality of such elements). In Figs. 3A-3C, second reactant layer **126'** is an active adhesive (i.e. an adhesive comprising or constituting the second reactant) and is associated with carrier film **122'** through a release layer **150**. The release layer **150** is bonded to the carrier film **122'** by an adhesive **152**. Release layer **150** comprises or is made of a material that binds to the second reactant layer **126'** less effectively than the binding of the second reactant layer **126'** to metal film **116'**. Hence, due to the difference in binding, bringing the second reactant layer **126'** into contact with the metal film **116'** by elastically deforming section **124'** will cause the second reactant layer **126'** to adhere to metal film **116'**, and detach from release layer **150**, as seen in Fig. 3C.

In the variation of Fig. 3D, the adhesion strength of adhesive **152** to release layer **150** is lower than the adhesion strength of second reactant layer **126'** to metal film **116'**. Hence, once second reactant layer **126'** is adhered to metal film **116'**, it detaches, together with release layer **150** from adhesive **152**.

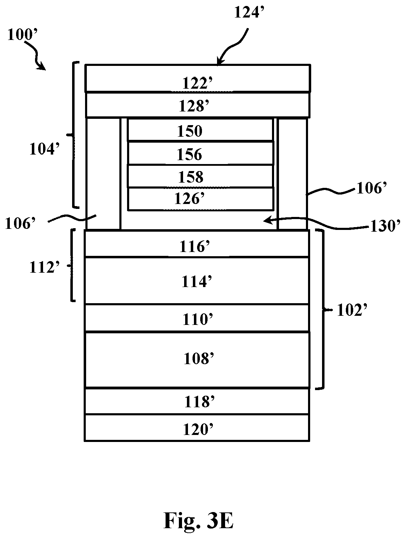

In the variation of Fig. 3E, second reactant layer **126'** (which is constituted by an active adhesive) is carried by film **158**, which is attached to release layer **150** via lamination adhesive **156.**

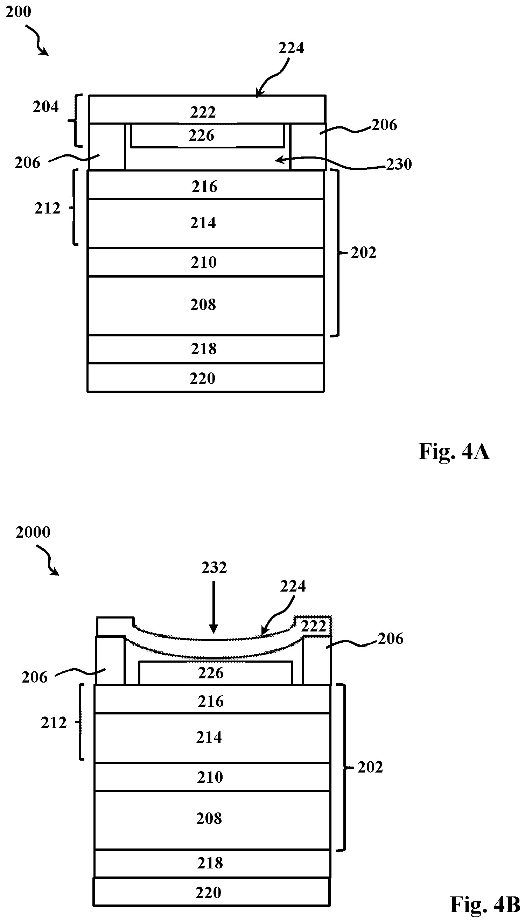

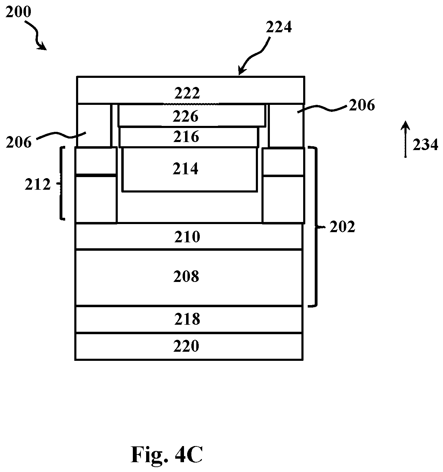

Another example is provided in Figs. 4A-4C. TTI device **200** comprises first element **202** and second element **204**, which are separated by a spacer **206**. Similar to the device of Figs. 1A-1C, first element **202** comprises substrate film **108,** onto which a first reactant layer **212** is adhered by a first adhesive **210.** First reactant layer **212** is a metalized polymeric film comprising polymeric film **214** and thin metal (e.g. aluminum) film **216**. Substrate **208** is coated by package-attaching adhesive layer **218**, which is covered by a user-removable protective release layer **220** to permit attachment of the device to the perishable good or to a packaging thereof.

Second element **204** comprises carrier film **222** that has a pressable section **224,** which is attached to second reactant layer **226** (for example a pressure-sensitive adhesive matrix in which an etchant is dispersed). In this example, the presence of intermediate adhesive **228** is optional.

In Fig. 4A, the TTI device **200** is at its non-activated state, in which the first reactant layer **202** and the second reactant layer **204** are non-contacted and separated by spacer **206**.

Similar to the example of Fig. 1A, a user applies force onto the pressable section **224** (represented by arrow **232** in Fig. 4B), in order to activate the device. Due to this force application, pressable section **224** is elastically deformed, causing the second reactant layer **226** to be displaced through hollow activation zone **230** towards the first reactant layer **212**, and once contacted, the second reactant layer **226** (being or comprising an adhesive matrix) adheres to metal film **216**.

In this example, the first adhesive **210** has a lower adhesion strength to film 214 than that of the adhesion strength of the adhesive constituting (or being part of) the second reactant layer **226** to metal film **216**. Hence, once second reactant layer **226** is adhered to metal film **216**, and pressable section **224** returns to its non-pressed state (in the direction of arrow **234**) due to its elasticity, a portion of metal film **216** and polymeric film **214** detaches from the first adhesive **210** and is displaced upwards together with second reactant layer **226**, and the TTI device is activated.

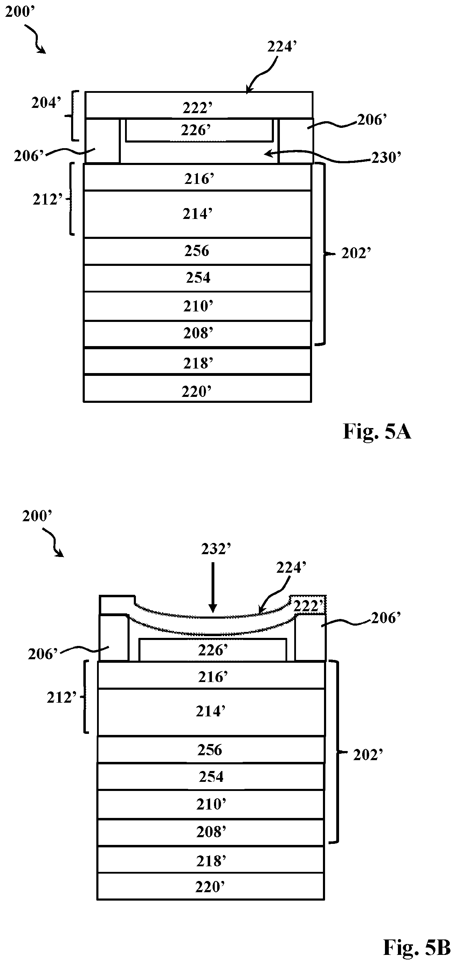

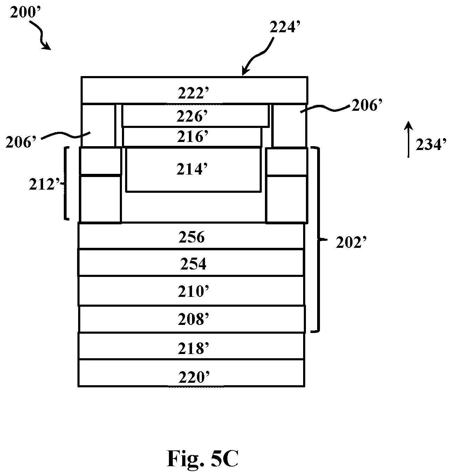

A variant of the exemplary configuration of Figs. 4A-4C is shown in Figs. 5A-5C (elements having the same function as those in Figs. 4A-4C are marked in Figs. 5A-5C with a " ' " marking; the reader is directed to the description of Figs. 4A-4C for full understanding of the functionality of such elements). In Figs. 5A-5C, the first reactant layer **212'** is associated with substrate film **208'** through a release layer **254**. The release layer **254** is bonded to the substrate film **208'** by adhesive **210'** and to polymeric film **214'** via adhesive **256**. Release layer **254** comprises or is made of a material that binds to the polymeric film **214'** less effectively than the binding of the second reactant layer **226'** to the metal film **216'.** Hence, due to the difference in binding, bringing the second reactant layer **226'** into contact with metal film **216'** by elastically deforming section **224'** will cause the second reactant layer **226'** to adhere to the metal film **216'**, and when the pressable section **224'** returns to its substantively non-pressed state - a position of the first reactant layer **212'** will detach from the release layer **254** and its associated adhesive **256**.

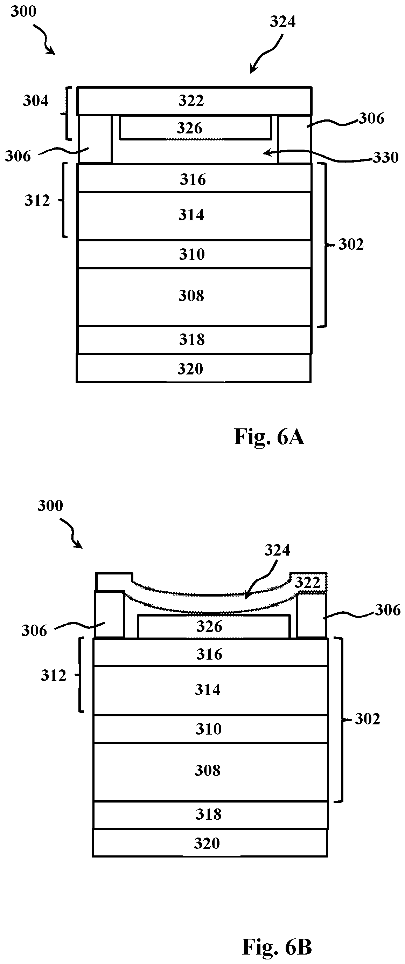

Another configuration of the TTI device is shown in Figs. 6A-6B. In the device 300 shown in Figs. 6A-6B, similar elements to those of Figs. 1A-1C are included, shifted by 200. For example, spacer 306 in Fig. 3A has the same function as spacer 106 in Fig. 1A. Hence, the reader is referred to the description of Fig. 1A for a detailed description of the various functional elements.

Unlike the devices of Figs. 1A-1C and 3A-5C, the TTI device **300** comprises the pressable section **324** that is plastically deformed when force is applied thereonto. Hence, once force is applied and removed, pressable section **324** does not return to its non-pressed state, and serves to further secure the adhered second reactant layer **326** and the first reactant layer **312** in position.

It is noted that in any of the variations of Figs. 3A-6B, the same environmental protection configurations may be used as in the variants of Figs. 1D-1E described above.

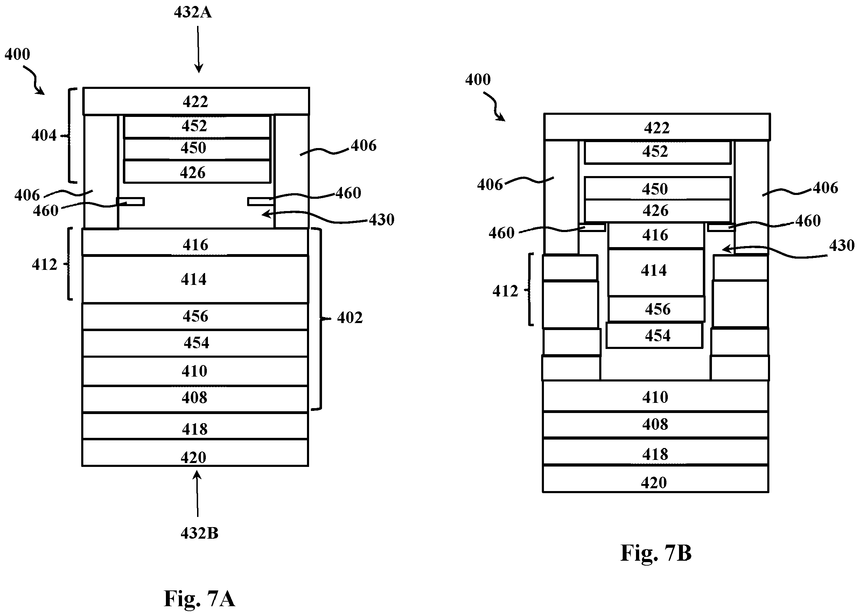

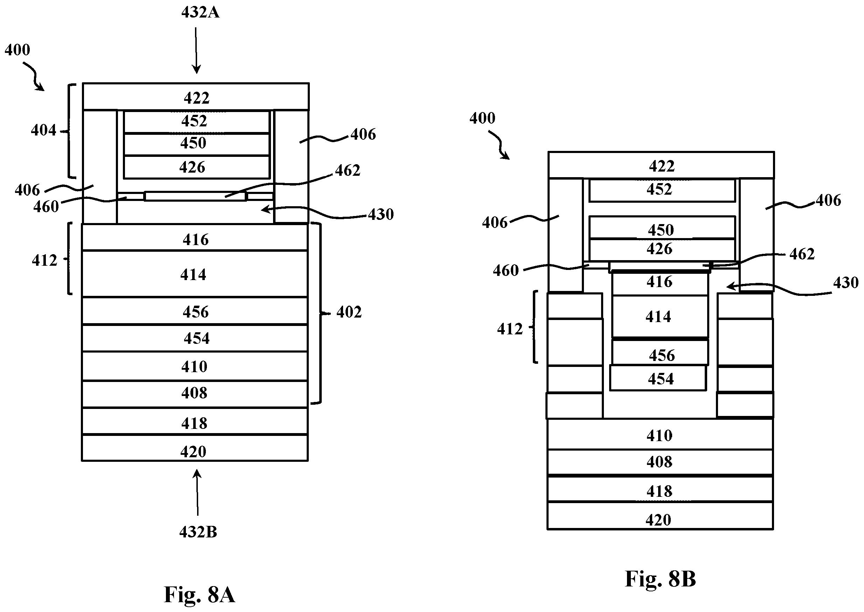

Another exemplary embodiment is shown in Figs. 7A-7B. In the device 400 shown in Figs. 8A-8B, similar elements to those of Figs. 1A-1C are included, shifted by 300. For example, spacer 406 in Fig. 7A has the same function as spacer 106 in Fig. 1A. Hence, the reader is referred to the description of Fig. 1A for a detailed description of the various functional elements.

TTI device **400** comprises a first element **402** and a second element **404**, separated by a spacer **406**. Spacer **406** further comprises protrusions **460** that extend into hollow activation zone **430**.

First element **402** comprises a substrate film **408**, which is associated with first reactant layer **412** via release layer **454** (which is bonded to polymeric film **414** through adhesive **456**). Second reactant layer **426,** which is an adhesive that comprises or constitutes the second reactant, is attached to release layer **450**, which is bonded carrier film **422** via adhesive **452** (as shown in Fig. 7A).

In this configuration, both the carrier film **422** and the first element **402** have pressable portions, such that when force is applied along oppositely directed arrows **432A** and **432B**, both the first element and the second element oppositely displace into hollow activation zone **430**. In this embodiment, the second reactant layer **426** is larger than the opening defined between the protrusions **460**, and hence will be arrested from further displacement within the hollow activation zone once contacting and binding to the protrusions **460**. The first reactant layer **412** will be displaced in the direction of arrow **432B** until a portion of metal film **416** contacts and adheres to second reactant layer **426**. As the adhesion strength between the metal film **416** and the second reactant layer **426** is stronger than both the binding of adhesive **452** to the release layer **450** and from the adhesion strength of adhesive **410** to release layer **454** - the second reactant layer **426** will detach together with release layer **450** from adhesive **452** and the portion of the first reactant layer **412** will detach together release layer **454** from adhesive **410** when the first and second elements return to their substantially non-pressed states (as shown in Fig. 7B).

Another variant of the configuration of Figs. 7A-7B is shown in Fig. 8A-8B, with the only difference being the presence of membrane barrier member **462**. Membrane barrier element **462** may be porous (or permeable) to the etchant contained in the second reactant layer **426** as to permit diffusion of the etchant through the membrane to cause etching of the metal film **416** when contacted. Alternatively, membrane barrier member **462** can be breakable or breachable upon application of force (e.g. along arrows **432A** and/or **432B),** such that once force is applied onto the device in order to bring the first and second reactant layers into contact with one another, such force is sufficient to break or breach the membrane barrier member **462** to permit contact between the etchant and the metal film.

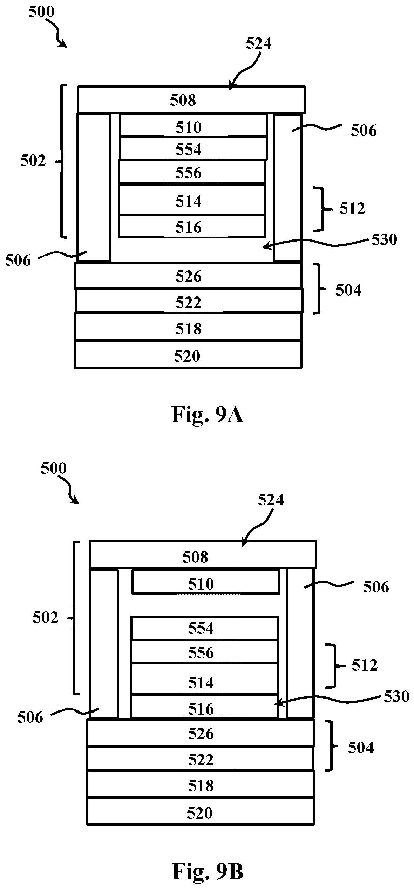

Another device not forming part of the invention is shown in Figs. 9A-9B, in which the pressable section is part of the substate film of the first element rather than of the carrier film of the second element. In the device 500 shown in Figs. 9A-9B, similar elements to those of Figs. 1A-1C are included, shifted by 400. For example, spacer 506 in Fig. 9A has the same function as spacer 106 in Fig. 1A. Hence, the reader is referred to the description of Fig. 1A for a detailed description of the various functional elements.

As can be seen, in the device **500**, first element **502** has a pressable section **524**, which can be pressed to displace the first reactant layer **512** into hollow reaction zone **530** towards second reactant layer **526**. First reactant layer **512** is adhered to release layer **554** via adhesive **556**; while release layer **554** is adhered to substrate film **508** via adhesive **510**. As the adhesion strength between the active adhesive constituting second reactant layer **526** and metal layer **516** is stronger than the adhesion strength between adhesive **510** and release layer **554** - once the first and second reactant layers are attached to one another by pressing onto pressable section **524**, metal film **516** (together with polymeric film **514** and release layer **554**) will detach from the substrate **508**.

## Claims

1. A time-temperature indication (TTI) device (100, 200, 300, 400, 500), comprising:
a first element (102, 202, 302, 402, 502) comprising a substrate film (108, 208, 208', 408, 508) carrying a first reactant layer (112, 212, 212', 312, 412, 512);
a second element (104, 204, 304, 404) comprising a carrier film (122, 122', 222, 422) having at least one pressable section (124, 124', 224, 324), said pressable section (124, 124', 224, 324) carrying a second reactant layer (126, 126', 226, 326, 426, 526) on at least a portion thereof, the second reactant layer (126, 126', 226, 326, 426, 526) configured to adhere to the first reactant layer (112, 212, 212', 312, 412, 512);
a spacer (106, 206, 306, 406, 506) configured to separate between the first element (102, 202, 302, 402, 502) and the second element (104, 204, 304, 404), and having a hollow activation zone (130, 230, 330, 430, 530) substantially aligned with said at least one pressable section (124, 124', 224, 324);
the device (100, 200, 300, 400, 500) having a non-activated state, in which the first reactant layer (112, 212, 212', 312, 412, 512) and the second reactant layer (126, 126', 226, 326, 426, 526) are non-contacted,
and an activated state, in which said second reactant layer (126, 126', 226, 326, 426, 526) is adhered to at least a portion of said first reactant layer (112, 212, 212', 312, 412, 512) to enable a reaction therebetween that causes at least one substantially irreversible change in physical property of the device (100, 200, 300, 400, 500), said reaction being indicative to time-temperature history of the device,
the device (100, 200, 300, 400, 500) being switchable from the non-activated state to the activated state by displacing the pressable section (124, 124', 224, 324) into the hollow activation zone (130, 230, 330, 430, 530) towards said first element (102, 202, 302, 402, 502) to cause adhering of the second reactant layer (126, 126', 226, 326, 426, 526) to the first reactant layer (112, 212, 212', 312, 412, 512).

2. The TTI device of claim 1, wherein the pressable section (124, 124', 224, 324) is plastically deformable, optionally the pressable section (124, 124', 224, 324) is elastically deformable.

3. The TTI device of claim 2, wherein the first reactant layer (112, 212, 212', 312, 412, 512) is detachable from the substrate film (108, 208, 208', 408, 508), such that adherence to the second reactant layer (126, 126', 226, 326, 426, 526) detaches at least a portion of the first reactant layer (112, 212, 212', 312, 412, 512) from the substrate film (108, 208, 208', 408, 508), optionally, the second reactant layer (126, 126', 226, 326, 426, 526) is detachable from the carrier film (122, 122', 222, 422), such that adherence to the first reactant layer (112, 212, 212', 312, 412, 512) detaches the second reactant layer (126, 126', 226, 326, 426, 526) from the carrier film (122, 122', 222, 422).

4. The TTI device of any one of claims 1 to 3, wherein at least a portion of the first element (102, 202, 302, 402, 502) is deformable or pressable, and said hollow activation zone (130, 230, 330, 430, 530) is configured to accommodate displacement of at least a portion of the first reactant layer (112, 212, 212', 312, 412, 512) thereinto.

5. The TTI device of any one of claims 1 to 4, wherein the first reactant layer (112, 212, 212', 312, 412, 512) comprises a metal-containing sub-layer (116, 216, 416, 516), preferably, in the form of metal particles embedded in a polymeric matrix, further preferably, the metal or the metal particles are selected from aluminum, copper, silver, iron, magnesium, titanium, tin, chromium, zinc, nickel, and alloys of thereof.

6. The TTI device of any one of claims 1 to 5, wherein the pressable section (124, 124', 224, 324) of the carrier film (122, 122', 222, 422) is clear, transparent, or semi-transparent, preferably, at least a portion of the carrier film (122, 122', 222, 422), save the pressable section (124, 124', 224, 324), comprises at least one of lettering, color blocks, color scale, pictograms, or ornaments.

7. The TTI device of any one of claims 1 to 6, encapsulated by one or more encapsulation layers.

8. The TTI device of any one of claims 1 to 7, wherein the first element (102, 202, 302, 402, 502) is configured for attachment to a surface of an article.

9. An article of manufacture comprising one or more time-temperature indication (TTI) device (100, 200, 300, 400, 500) of any one of claims 1 to 8.

10. The article of claim 9 or the TTI device of claim 8, wherein the article being a perishable good and/or a packaging of a perishable good.

11. A method of activating a time-temperature indication (TTI) device (100, 200, 300, 400), the method comprising:
displacing a pressable section (124, 124', 224, 324) of a carrier film (122, 122', 222, 422) of a second element (122, 122', 222, 422) of the TTI device (100, 200, 300, 400) towards a first reactant layer (112, 212, 212', 312, 412) of a first element (102, 202, 302, 402) of the TTI device (100, 200, 300, 400), the pressable section (124, 124', 224, 324) carrying a second reactant layer (126, 126', 226, 326, 426) on at least a portion thereof which is configured to adhere to the first reactant layer (112), said displacing being through a hollow activation zone (130, 230, 330, 430) that is substantially aligned with said at least one pressable section (124, 124', 224, 324) and being defined in a spacer (106, 206, 306, 406) configured to separate between the first element (102, 202, 302, 402) and the second element (104, 204, 304, 404), and said displacing causing adhering of the second reactant layer (126, 126', 226, 326, 426) to the first reactant layer (112, 212, 212', 312, 412) to activate a reaction therebetween, the reaction causing at least one substantially irreversible change in physical property of the device (100, 200, 300, 400) that is indicative to time- temperature history of the device.

12. A method of activating a time-temperature indication (TTI) device (500), the method comprising:
displacing a pressable section (524) of a substrate film (508) of a first element (502) of the TTI device (500) towards a second reactant layer (126) of a second element (104) of the TTI device (100), the pressable section (524) carrying a first reactant layer (512) on at least a portion thereof, the second reactant layer (526) being configured to adhere to the first reactant layer (512), said displacing being through a hollow activation zone (530) that is substantially aligned with said at least one pressable section (524) and being defined in a spacer (506) configured to separate between the first element (502) and the second element (504), and said displacing causing adhering of the first reactant layer (512) to the second reactant layer (526) to activate a reaction therebetween, the reaction causing at least one substantially irreversible change in physical property of the device (500) that is indicative to time-temperature history of the device (500).

13. The method of claim 11 or 12, further comprising displacing at least a portion of the second reactant layer (126, 226, 326, 426, 526) into the hollow activation zone (130, 230, 330, 430, 530) towards the first reactant layer (112, 212, 312, 412, 512).

14. The method of any one of claims 11 to 13, wherein one or both of the first reactant layer (112, 212, 312, 412, 512) and the second reactant layer (126, 226, 326, 426, 526) are detachable from the substrate film (108, 208, 308, 408, 508) and the carrier film (122, 222, 322, 422, 522), respectively, to permit detachment of said first reactant layer (112, 212, 312, 412, 512) and/or second reactant layer (126, 226, 326, 426, 526) from said substrate film (108, 208, 308, 408, 508) and carrier film (122, 222, 322, 422, 522), respectively, after adherence of the second reactant layer (126, 226, 326, 426, 526) to the first reactant layer (112, 1).

15. The TTI device of claim 1, wherein
the reaction is indicative to time-temperature history, temperature history, time history of the device (100, 200, 300, 400, 500) or partial time-temperature history.

## Patentansprüche

1. Vorrichtung zur Zeit-Temperatur-Indikation (TTI-Vorrichtung) (100, 200, 300, 400, 500), die Folgendes umfasst:
ein erstes Element (102, 202, 302, 402, 502), das eine Substratfolie (108, 208, 208', 408, 508) umfasst, die eine erste Reaktantenschicht (112, 212, 212', 312, 412, 512) trägt;
ein zweites Element (104, 204, 304, 404), das eine Trägerfolie (122, 122', 222, 422) mit mindestens einem drückbaren Abschnitt (124, 124', 224, 324) umfasst, wobei der drückbare Abschnitt (124, 124', 224, 324) auf mindestens einem Teil davon eine zweite Reaktantenschicht (126, 126', 226, 326, 426, 526) trägt, wobei die zweite Reaktantenschicht (126, 126', 226, 326, 426, 526) so konfiguriert ist, dass sie an der ersten Reaktantenschicht (112, 212, 212', 312, 412, 512) haftet;
einen Abstandshalter (106, 206, 306, 406, 506), der so konfiguriert ist, dass er zwischen dem ersten Element (102, 202, 302, 402, 502) und dem zweiten Element (104, 204, 304, 404) trennt, und der eine hohle Aktivierungszone (130, 230, 330, 430, 530) aufweist, die im Wesentlichen mit dem mindestens einen drückbaren Abschnitt (124, 124', 224, 324) fluchtend ist;
wobei die Vorrichtung (100, 200, 300, 400, 500) einen nichtaktivierten Zustand aufweist, in welchem die erste Reaktantenschicht (112, 212, 212', 312, 412, 512) und die zweite Reaktantenschicht (126, 126', 226, 326, 426, 526) nicht kontaktiert sind,
und einen aktivierten Zustand aufweist, in welchem die zweite Reaktantenschicht (126, 126', 226, 326, 426, 526) an mindestens einem Teil der ersten Reaktantenschicht (112, 212, 212', 312, 412, 512) haftet, um eine Reaktion dazwischen zu ermöglichen, die mindestens eine im Wesentlichen unumkehrbare Änderung der physikalischen Eigenschaft der Vorrichtung (100, 200, 300, 400, 500) bewirkt, wobei die Reaktion auf den Zeit-Temperatur-Verlauf der Vorrichtung schließen lässt,
wobei die Vorrichtung (100, 200, 300, 400, 500) vom nichtaktivierten Zustand in den aktivierten Zustand umschaltbar ist, indem der drückbare Abschnitt (124, 124', 224, 324) in die hohle Aktivierungszone (130, 230, 330, 430, 530) in Richtung des ersten Elements (102, 202, 302, 402, 502) verschoben wird, um ein Anhaften der zweiten Reaktantenschicht (126, 126', 226, 326, 426, 526) an der ersten Reaktantenschicht (112, 212, 212', 312, 412, 512) zu bewirken.

2. TTI-Vorrichtung nach Anspruch 1, wobei der drückbare Abschnitt (124, 124', 224, 324) plastisch verformbar ist, optional wobei der drückbare Abschnitt (124, 124', 224, 324) elastisch verformbar ist.

3. TTI-Vorrichtung nach Anspruch 2, wobei die erste Reaktantenschicht (112, 212, 212', 312, 412, 512) von der Substratfolie (108, 208, 208', 408, 508) ablösbar ist, so dass das Anhaften an der zweiten Reaktantenschicht (126, 126', 226, 326, 426, 526) mindestens einen Teil der ersten Reaktantenschicht (112, 212, 212', 312, 412, 512) von der Substratfolie (108, 208, 208', 408, 508) ablöst, wobei optional die zweite Reaktantenschicht (126, 126', 226, 326, 426, 526) von der Trägerfolie (122, 122', 222, 422) ablösbar ist, so dass das Anhaften an der ersten Reaktantenschicht (112, 212, 212', 312, 412, 512) die zweite Reaktantenschicht (126, 126', 226, 326, 426, 526) von der Trägerfolie (122, 122', 222, 422) ablöst.

4. TTI-Vorrichtung nach einem der Ansprüche 1 bis 3, wobei mindestens ein Teil des ersten Elements (102, 202, 302, 402, 502) verformbar oder drückbar ist und die hohle Aktivierungszone (130, 230, 330, 430, 530) so konfiguriert ist, dass sie eine Verschiebung von mindestens einem Teil der ersten Reaktantenschicht (112, 212, 212', 312, 412, 512) dorthinein zulässt.

5. TTI-Vorrichtung nach einem der Ansprüche 1 bis 4, wobei die erste Reaktantenschicht (112, 212, 212', 312, 412, 512) eine metallhaltige Unterschicht (116, 216, 416, 516) umfasst, vorzugsweise in Form von in eine Polymermatrix eingebetteten Metallpartikeln, wobei ferner vorzugsweise das Metall oder die Metallpartikel aus Aluminium, Kupfer, Silber, Eisen, Magnesium, Titan, Zinn, Chrom, Zink, Nickel und Legierungen davon ausgewählt sind.

6. TTI-Vorrichtung nach einem der Ansprüche 1 bis 5, wobei der drückbare Abschnitt (124, 124', 224, 324) der Trägerfolie (122, 122', 222, 422) klar, durchsichtig oder halbdurchsichtig ist, wobei vorzugsweise mindestens ein Teil der Trägerfolie (122, 122', 222, 422), mit Ausnahme des drückbaren Abschnitts (124, 124', 224, 324), mindestens eines von Schriftzügen, Farbblöcken, Farbskala, Piktogrammen oder Ornamenten umfasst.

7. TTI-Vorrichtung nach einem der Ansprüche 1 bis 6, ummantelt von einer oder mehreren Ummantelungsschichten.

8. TTI-Vorrichtung nach einem der Ansprüche 1 bis 7, wobei das erste Element (102, 202, 302, 402, 502) zur Befestigung an einer Oberfläche eines Erzeugnisses konfiguriert ist.

9. Herstellungserzeugnis, das ein oder mehrere Vorrichtungen zur Zeit-Temperatur-Indikation (TTI-Vorrichtung) (100, 200, 300, 400, 500) nach einem der Ansprüche 1 bis 8 umfasst.

10. Erzeugnis nach Anspruch 9 oder TTI-Vorrichtung nach Anspruch 8, wobei das Erzeugnis ein verderbliches Gut und/oder eine Verpackung eines verderblichen Gutes ist.

11. Verfahren zum Aktivieren einer Vorrichtung zur Zeit-Temperatur-Indikation (TTI-Vorrichtung) (100, 200, 300, 400), wobei das Verfahren umfasst:
Verschieben eines drückbaren Abschnitts (124, 124', 224, 324) einer Trägerfolie (122, 122', 222, 422) eines zweiten Elements (122, 122', 222, 422) der TTI-Vorrichtung (100, 200, 300, 400) in Richtung einer ersten Reaktantenschicht (112, 212, 212', 312, 412) eines ersten Elements (102, 202, 302, 402) der TTI-Vorrichtung (100, 200, 300, 400), wobei der drückbare Abschnitt (124, 124', 224, 324) eine zweite Reaktantenschicht (126, 126', 226, 326, 426) auf mindestens einem Teil davon trägt, der so konfiguriert ist, dass er an der ersten Reaktantenschicht (112) haftet, wobei das Verschieben durch eine hohle Aktivierungszone (130, 230, 330, 430) erfolgt, die im Wesentlichen mit dem mindestens einen drückbaren Abschnitt (124, 124', 224, 324) fluchtend ist und in einem Abstandshalter (106, 206, 306, 406) eingegrenzt ist, der so konfiguriert ist, dass er zwischen dem ersten Element (102, 202, 302, 402) und dem zweiten Element (104, 204, 304, 404) trennt, und wobei das Verschieben ein Anhaften der zweiten Reaktantenschicht (126, 126', 226, 326, 426) an der ersten Reaktantenschicht (112, 212, 212', 312, 412) bewirkt, um eine Reaktion dazwischen zu aktivieren, wobei die Reaktion mindestens eine im Wesentlichen unumkehrbare Änderung der physikalischen Eigenschaft der Vorrichtung (100, 200, 300, 400) bewirkt, die auf den Zeit-Temperatur-Verlauf der Vorrichtung schließen lässt.

12. Verfahren des Aktivierens einer Vorrichtung zur Zeit-Temperatur-Indikation (TTI-Vorrichtung) (500), wobei das Verfahren umfasst:
Verschieben eines drückbaren Abschnitts (524) einer Substratfolie (508) eines ersten Elements (502) der TTI-Vorrichtung (500) in Richtung einer zweiten Reaktantenschicht (126) eines zweiten Elements (104) der TTI-Vorrichtung (100), wobei der drückbare Abschnitt (524) auf mindestens einem Teil davon eine erste Reaktantenschicht (512) trägt, wobei die zweite Reaktantenschicht (526) so konfiguriert ist, dass sie an der ersten Reaktantenschicht (512) haftet, wobei das Verschieben durch eine hohle Aktivierungszone (530) erfolgt, die im Wesentlichen mit dem mindestens einen drückbaren Abschnitt (524) fluchtend ist und in einem Abstandshalter (506) eingegrenzt ist, der so konfiguriert ist, dass er zwischen dem ersten Element (502) und dem zweiten Element (504) trennt, und wobei das Verschieben ein Anhaften der ersten Reaktantenschicht (512) an der zweiten Reaktantenschicht (526) bewirkt, um eine Reaktion dazwischen zu aktivieren, wobei die Reaktion mindestens eine im Wesentlichen unumkehrbare Änderung der physikalischen Eigenschaft der Vorrichtung (500) bewirkt, die auf den Zeit-Temperatur-Verlauf der Vorrichtung (500) schließen lässt.

13. Verfahren nach Anspruch 11 oder 12, das ferner das Verschieben von mindestens einem Teil der zweiten Reaktantenschicht (126, 226, 326, 426, 526) in die hohle Aktivierungszone (130, 230, 330, 430, 530) in Richtung der ersten Reaktantenschicht (112, 212, 312, 412, 512) umfasst.

14. Verfahren nach einem der Ansprüche 11 bis 13, wobei eine oder beide der ersten Reaktantenschicht (112, 212, 312, 412, 512) und der zweiten Reaktantenschicht (126, 226, 326, 426, 526) von der Substratfolie (108, 208, 308, 408, 508) bzw. der Trägerfolie (122, 222, 322, 422, 522) ablösbar sind, um das Ablösen der ersten Reaktantenschicht (112, 212, 312, 412, 512) und/oder der zweiten Reaktantenschicht (126, 226, 326, 426, 526) von der Substratfolie (108, 208, 308, 408, 508) bzw. der Trägerfolie (122, 222, 322, 422, 522) nach dem Anhaften der zweite Reaktantenschicht (126, 226, 326, 426, 526) an der ersten Reaktantenschicht (112, 1) zuzulassen.

15. TTI-Vorrichtung nach Anspruch 1, wobei
die Reaktion auf einen Zeit-Temperatur-Verlauf, einen Temperaturverlauf, einen Zeitverlauf der Vorrichtung (100, 200, 300, 400, 500) oder einen partiellen Zeit-Temperatur-Verlauf schließen lässt.

## Revendications

1. Dispositif d'indication de temps-température (TTI) (100, 200, 300, 400, 500), comprenant :
un premier élément (102, 202, 302, 402, 502) comprenant un film de substrat (108, 208, 208', 408, 508) portant une première couche de réactif (112, 212, 212', 312, 412, 512) ;
un second élément (104, 204, 304, 404) comprenant un film de support (122, 122', 222, 422) comportant au moins une section pouvant être pressée (124, 124', 224, 324), ladite section pouvant être pressée (124, 124', 224, 324) portant une seconde couche de réactif (126, 126', 226, 326, 426, 526) sur au moins une partie de celle-ci, la seconde couche de réactif (126, 126', 226, 326, 426, 526) étant conçue pour adhérer à la première couche de réactif (112, 212, 212', 312, 412, 512) ;
un espaceur (106, 206, 306, 406, 506) conçu pour de séparer entre le premier élément (102, 202, 302, 402, 502) et le second élément (104, 204, 304, 404), et comportant une zone d'activation creuse (130, 230, 330, 430, 530) sensiblement alignée avec ladite au moins une section pouvant être pressée (124, 124', 224, 324) ;
le dispositif (100, 200, 300, 400, 500) comportant un état non activé, ladite première couche de réactif (112, 212, 212', 312, 412, 512) et ladite seconde couche de réactif (126, 126', 226, 326, 426, 526) ne sont pas en contact,
et un état activé, dans lequel ladite seconde couche de réactif (126, 126', 226, 326, 426, 526) adhère à au moins une partie de ladite première couche de réactif (112, 212, 212', 312, 412, 512) pour permettre une réaction entre elles qui provoque au moins un changement sensiblement irréversible de propriété physique du dispositif (100, 200, 300, 400, 500), ladite réaction indiquant l'historique de temps-température du dispositif,
le dispositif (100, 200, 300, 400, 500) pouvant passer de l'état non activé à l'état activé en déplaçant la section pouvant être pressée (124, 124', 224, 324) dans la zone d'activation creuse (130, 230, 330, 430, 530) vers ledit premier élément (102, 202, 302, 402, 502) de manière à provoquer l'adhérence de la seconde couche de réactif (126, 126', 226, 326, 426, 526) à la première couche de réactif (112, 212, 212', 312, 412, 512).

2. Dispositif de TTI selon la revendication 1, ladite section pouvant être pressée (124, 124', 224, 324) étant déformable plastiquement, éventuellement ladite section pouvant être pressée (124, 124', 224, 324) étant élastiquement déformable.

3. Dispositif de TTI selon la revendication 2, ladite première couche de réactif (112, 212, 212', 312, 412, 512) étant détachable du film de substrat (108, 208, 208', 408, 508), de sorte que l'adhérence à la seconde couche de réactif (126, 126', 226, 326, 426, 526) détache au moins une partie de la première couche de réactif (112, 212, 212', 312, 412, 512) du film de substrat (108, 208, 208', 408, 508), éventuellement, ladite seconde couche de réactif (126, 126', 226, 326, 426, 526) étant détachable du film de support (122, 122', 222, 422), de sorte que l'adhérence à la première couche de réactif (112, 212, 212', 312, 412, 512) détache la seconde couche de réactif (126, 126', 226, 326, 426, 526) du film de support (122, 122', 222, 422).

4. Dispositif de TTI selon l'une quelconque des revendications 1 à 3, au moins une partie du premier élément (102, 202, 302, 402, 502) étant déformable ou pouvant être pressée, et ladite zone d'activation creuse (130, 230, 330, 430, 530) étant conçue pour s'adapter au déplacement d'au moins une partie de la première couche de réactif (112, 212, 212', 312, 412, 512) dans celle-ci.

5. Dispositif de TTI selon l'une quelconque des revendications 1 à 4, ladite première couche de réactif (112, 212, 212', 312, 412, 512) comprenant une sous-couche (116, 216, 416, 516) contenant du métal, de préférence sous la forme de particules métalliques incorporées dans une matrice polymère, de préférence encore, ledit métal ou lesdites particules métalliques étant choisis parmi l'aluminium, le cuivre, l'argent, le fer, le magnésium, le titane, l'étain, le chrome, le zinc, le nickel et leurs alliages.

6. Dispositif de TTI selon l'une quelconque des revendications 1 à 5, ladite section pouvant être pressée (124, 124', 224, 324) du film de support (122, 122', 222, 422) étant claire, transparente ou semi-transparente, de préférence, au moins une partie du film de support (122, 122', 222, 422), à l'exception de la section pouvant être pressée (124, 124', 224, 324), comprenant au moins un élément parmi des lettres, des blocs de couleur, une échelle de couleurs, des pictogrammes ou des décorations.

7. Dispositif de TTI selon l'une quelconque des revendications 1 à 6, encapsulé par une ou plusieurs couches d'encapsulation.

8. Dispositif de TTI selon l'une quelconque des revendications 1 à 7, ledit premier élément (102, 202, 302, 402, 502) étant conçu pour être fixé à une surface d'un article.

9. Article manufacturé comprenant un ou plusieurs dispositifs d'indication de temps-température (TTI) (100, 200, 300, 400, 500) selon l'une quelconque des revendications 1 à 8.

10. Article selon la revendication 9 ou dispositif de TTI selon la revendication 8, ledit article étant une denrée périssable et/ou un emballage d'une denrée périssable.

11. Procédé d'activation d'un dispositif d'indication de temps-température (TTI) (100, 200, 300, 400), le procédé comprenant :
le déplacement d'une section pouvant être pressée (124, 124', 224, 324) d'un film de support (122, 122', 222, 422) d'un second élément (122, 122', 222, 422) du dispositif de TTI (100, 200, 300, 400) vers une première couche de réactif (112, 212, 212', 312, 412) d'un premier élément (102, 202, 302, 402) du dispositif de TTI (100, 200, 300, 400), la section pouvant être pressée (124, 124', 224, 324) portant une seconde couche de réactif (126, 126', 226, 326, 426) sur au moins une partie de celle-ci qui est conçue pour adhérer à la première couche de réactif (112), ledit déplacement se faisant à travers une zone d'activation creuse (130, 230, 330, 430) qui est sensiblement alignée avec ladite au moins une section pouvant être pressée (124, 124', 224, 324) et étant défini dans un espaceur (106, 206, 306, 406) conçu pour se séparer entre le premier élément (102, 202, 302, 402) et le second élément (104, 204, 304, 404), et ledit déplacement provoquant l'adhérence de la seconde couche de réactif (126, 126', 226, 326, 426) à la première couche de réactif (112, 212, 212', 312, 412) de manière à activer une réaction entre elles, la réaction provoquant au moins un changement sensiblement irréversible de propriété physique du dispositif (100, 200, 300, 400) qui indique l'historique de temps-température du dispositif.

12. Procédé d'activation d'un dispositif d'indication de temps-température (TTI) (500), le procédé comprenant :
le déplacement d'une section pouvant être pressée (524) d'un film de substrat (508) d'un premier élément (502) du dispositif de TTI (500) vers une seconde couche de réactif (126) d'un second élément (104) du dispositif de TTI (100), la section pouvant être pressée (524) portant une première couche de réactif (512) sur au moins une partie de celle-ci, la seconde couche de réactif (526) étant conçue pour adhérer à la première couche de réactif (512), ledit déplacement étant effectué à travers une zone d'activation creuse (530) qui est sensiblement alignée avec ladite au moins une section pouvant être pressée (524) et étant défini dans un espaceur (506) conçu pour se séparer entre le premier élément (502) et le second élément (504), et ledit déplacement provoquant l'adhérence de la première couche de réactif (512) à la seconde couche de réactif (526) de manière à activer une réaction entre elles, la réaction provoquant au moins un changement sensiblement irréversible de propriété physique du dispositif (500) qui indique l'historique de temps-température du dispositif (500).

13. Procédé selon la revendication 11 ou 12, comprenant en outre le déplacement d'au moins une partie de la seconde couche de réactif (126, 226, 326, 426, 526) dans la zone d'activation creuse (130, 230, 330, 430, 530) vers la première couche de réactif (112, 212, 312, 412, 512).

14. Procédé selon l'une quelconque des revendications 11 à 13, l'une et/ou l'autre couche de réactif (112, 212, 312, 412, 512) et ladite seconde couche de réactif (126, 226, 326, 426, 526) étant détachables du film de substrat (108, 208, 308, 408, 508) et du film de support (122, 222, 322, 422, 522), respectivement, pour permettre le détachement de ladite première couche de réactif (112, 212, 312, 412, 512) et/ou de ladite seconde couche de réactif (126, 226, 326, 426, 526) dudit film de substrat (108, 208, 308, 408, 508) et dudit film de support (122, 222, 322, 422, 522), respectivement, après adhérence de la seconde couche de réactif (126, 226, 326, 426, 526) à la première couche de réactif (112, 1).

15. Dispositif de TTI selon la revendication 1,
ladite réaction indiquant l'historique de temps-température, l'historique de température, l'historique de temps du dispositif (100, 200, 300, 400, 500) ou l'historique de temps-température partiel.
